# EUROPEAN PATENT SPECIFICATION

(11) **EP 2 984 057 B1**
(45) Date of publication and mention of the grant of the patent: **04.03.2020**
(21) Application number: 14715336.5
(22) Date of filing: 07.04.2014
(51) Int. Cl.: C04B 28/08, C04B 7/153

(54) **COMPOSITION FOR USE AS A TWO COMPONENT BACK FILLED GROUT COMPRISING EXTRACTED SILICATE**
ZUSAMMENSETZUNG ZUR VERWENDUNG ALS ZWEIKOMPONENTENVERFÜLLMÖRTEL MIT EXTRAHIERTEM SILIKAT
COMPOSITION POUR UTILISATION EN TANT QU'INJECTION DE REMBLAYAGE À DEUX COMPOSANTS CONTENANT UN EXTRAIT DE SILICATE

(30) Priority: 10.04.2013 EP 13163219
(43) Date of publication of application: 17.02.2016
(73) Proprietor: Sika Technology AG, 6340 Baar (CH)
(72) Inventor: LAI, Fook Chuan, Sremban 70200 (MY)
(74) Representative: Sika Patent Attorneys
(86) International application number: PCT/EP2014/056941
(87) International publication number: WO 2014/166875

(56) References cited:
- EP-A1- 1 801 084
- WO-A1-2005/049522
- WO-A1-2009/144141
- WO-A2-2010/079414
- US-A1- 2012 152 153
- SHAO-DONG WANG ET AL: "Factors affecting the strength of alkali-activated slag", CEMENT AND CONCRETE RESEARCH, vol. 24, no. 6, 1 January 1994 (1994-01-01), pages 1033-1043, XP055071135, ISSN: 0008-8846, DOI: 10.1016/0008-8846(94)90026-4
- YANG K H ET AL: "Properties of cementless mortars activated by sodium silicate", CONSTRUCTION AND BUILDING MATERIALS, ELSEVIER, NETHERLANDS, vol. 22, no. 9, 1 September 2008 (2008-09-01), pages 1981-1989, XP022691879, ISSN: 0950-0618, DOI: 10.1016/J.CONBUILDMAT.2007.07.003 [retrieved on 2008-05-28]

## Description

### Technical Field

The invention relates to a multi-component cementitious composition for use as back filled grout, a method for the manufacture of hardened cementitious articles based on this multi-component composition.

### Background of the Invention

Ground blast furnace slag is a by-product of cast iron production starting from iron minerals or scrap. In this process a liquid slag forms and floats on the molten metal. The main components of blast furnace slag are CaO (30-50 mass-%), SiO₂ (28-38 mass-%), Al₂O₃ (8-24 mass-%) and other oxides such as MgO (usually 1-18 mass-%) which separate from the metal at temperatures in excess of 1900°C. When this by-product is quickly cooled, a vitreous granulate with latent hydraulic properties is obtained.

The use of granulated blast furnace slag is permitted as a cement component by European standard EN 197-1, type II (Portland slag cement) and III (blast furnace cement) up to a theoretical slag content of 95%. This high value is related to the potential hydraulicity of slag and its activability in cementitious mixtures which enable concretes to be produced for particular applications, for instance where high durability with low heat development or with lower atmospheric CO₂-immisions is required.

Specifically, EN 197-1 requires the following conditions to be satisfied: (CaO+MgO)/SiO₂ > 1; CaO+MgO+SiO₂ > 67% and vitreous mass greater than 67%.

Slag activation requires the addition of an activator chosen from alkalis, sulphates, calcium oxide, or chloride ion-based alkaline salts. Alternatively, slag activation can be thermally initiated. The ability to replace Portland cement clinker with slag increases with the level of slag activation.

In general, the reactivity of cements of high slag content is considered to be too mild compared with cements of high clinker content. The high slag content is thus aimed at applications in which the typical high activity of clinker would lead to excessive overheating of the final concrete article.

In general, it would be desirable to have cements with high slag content which combine good mechanical characteristics such as in particular high compressive strength with quick curing. This property would also extend the application of high slag content cements to those sectors in which cements of high clinker content are currently used, as well as to structural applications in aggressive environments, or to a road, railway or airport construction of large castings or for castings in coastal localities.

In this regard, US 2012/010331 A1 discloses concrete compositions comprising blast furnace slag in amounts of up to 95 mass % with blast furnace slag fine particles having a fineness of 300-13000 cm²/g and 5 to 20 parts of gypsum. The concrete mixtures are hardened with an alkaline stimulant such a lime, calcium or sodium hydroxide, or Portland cement, from among which Portland cement is preferred as it gradually generates calcium hydroxide when brought into contact with water. The concrete composition described in US 2012/010331 A1 exhibit compressive strengths of up to 19 MPa after 7 days and up to about 46 MPa after the curing is finished at 28 days.

US 2012/234109 A1 describes a hydraulic binder comprising ground blast furnace slag in from 30 % to 90 % by mass of the binder, Portland cement clinker in an amount equal to or greater than 5 % by mass of the binder, and a sulphate such as CaSO₄, Na₂SO₄, K₂SO₄ as the activator. The cement composition prepared with such binder/activator combinations exhibit compressive strengths of up to 22 MPa after 2 days.

A special application field, in which blast furnace slags are frequently employed as hydraulic binders, are geopolymer compositions. Geopolymer hardening is based on the formation of three dimensional aluminumsilicate networks. Usually geopolymers are fabricated from mixtures of silicate precursors such as sodiumsilicate and an aluminium source such as calcined bauxite. In contrast to cementitious compositions, geopolmers do usually not contain regular cement or calciumhydroxide (hydrated lime).

Geopolymer compositions have for example been described in WO 2010/079414 A2, wherein the compositions comprise ground calcite, cotswood stone and blast furnace slag as the major ingredients. As explained above, these compositions comprise sodium silicate as a solution and calcined bauxite as precursors to the formation of the aluminium silicates. The compositions of WO 2010/079414 A2 are formulated and cured by addition of small amounts of water, which do not exceed more than 4 wt.-%.

EP 1 801 084 A1 likewise discloses geopolymer compositions comprising sodium silicate, fly-ash, blast furnace slag, sodium silicate sulution and a mixture of different aggregates as the major ingredients. The compositions of EP 1 801 084 A1 were cured by addition of water and sodium hydroxide with an overall water amount of about 5 wt.-%, based on the total composition.

US 2012/152153 A1 discloses several geopolymer compositions.

Finally, WO 2005/049522 A1 discloses geopolymer concretes comprising 40 to 60 % of coarse aggregates, 20 to 45 % of sand, 10 to 20% of fly ash and other binder components, 0.5 to 2% of sodium silicate and 0.2 to 0.6 % of sodium hydroxide. In the examples of this document a small amount of water was added to effect curing, so that the total water content in the composition did not exceed about 5 wt.-%.

As a result of the low amout of water being used for the formulation of geopolymers, the polymers usually have very limited flowability and are rather perceived as "wet mixes". Therefore, such compositions are not suitable for applications in which the material has to be injected into a gap between two walls, as is necessary for the placement of back filled grouts. For the same reason, geopoymers are not suitable for self levelling applications such as e.g. for screeds.

In some applications it is necessary that the cement exhibits a high early strength to allow for workers to cross a cast surface shortly after the casting, or to resume their work without having to wait until the cement has fully hardened. A suitable compressive strength in this regard is considered to be in excess of 0.5 MPa, which the cement composition should reach after a short time such as e.g. 2 hours. While the hardening of cement compositions can be accelerated by adding higher amounts of hardening agents, this usually leads to loss in final properties and short workability.

One approach to address this problem is a two component composition, in which the hardener is kept separate from the binder components. In this case, the binder component should preferably be stable in the absence of the hardener, i.e. the binder component including water should not harden or phase separate when kept for about 1 d to allow for e.g. safe transport to a building site. Once the hardener is mixed with the binder component, the composition should however quickly cure to provide a compressive strength of about 0.5 MPa or more after about 2 h.

As system which comes close to these requirements is currently available on the market in the form of grout compositions, which are formulated with a water to binder (W/P) ratio of 1.10 to 3.0 having an ordinary Portland cement content of from 300 kg/m³ to 638 kg/m³. These state of the art compositions in addition to ordinary Portland cement comprise bentonite clay and retarders and are hardened by the addition of 40% sodium silicate solution. While these compositions exhibit a suitable workability with gel times of within 4 to 12 s, the compositions provide 2 h compressive strengths of below 0.5 MPa.

There is a need for cementitious compositions which overcome the above mentioned deficits and in particular provide a 2 h compressive strength of 0.5 MPa or above and a good workability as expressed by a gel time in the range of 10 to 100 seconds. In addition, the binder component, when kept separate from the hardener, should preferably be stable for at least 1 day. The present application addresses these needs.

### Detailed description of the invention

The present application is directed at cementitious compositions comprising ground granulated blast furnace slag which provide high early compressive strengths, in particular compressive strengths after two hours of curing in excess of 0.5 mPa.

In a first aspect, the present invention is directed at a multi-component cementitious composition with at least a binder and a hardener component, wherein the binder component comprises ground granulated blast furnace slag and water and wherein the hardener component comprises a sodium silicate solution containing at least 42 wt.-%, preferably at least 45 wt.-% of sodium silicate (Na₂SiO₃) and wherein the ratio of total water to the combined solids in the binder and hardener component is in the range of 0.5 to 0.95.

Preferably, the multi-component cementitious composition is a two component cementitious composition which consists of the mentioned binder and hardener component. Thus, if the composition comprises components in addition to the ground granulated blast furnace slag, water and the sodium silicate solution, these preferably form either constituents of the binder or the hardener component.

In a preferred embodiment of the present invention, the multi-component cementitious composition provides a compressive strength after curing for two hours of > 0.5 MPa, preferably ≥ 1 MPa and most preferably ≥ 2 MPa. The compressive strength as the term is used in the present application means the compressive strength as determined according to ASTM 109/C 109M-05 after 2h of curing at 23°C/50 % relative humidity.

In addition, the multi-component cementitious composition preferably has a gel time or from about 10 to about 100 s, preferably from about 10 to 50 s, and most preferably in the range of from 10 to 20 s.

The ground granulated blast furnace slag employed in the practice of the present application is not subject to any relevant restrictions. The slag usually comprises CaO (30 to 50 mass-%), SiO₂ (28 to 38 mass-%), Al₂O₃ (8 to 24 mass-%) and MgO (1 to 18 mass-%) as the main components. In general, an increased CaO-content of the slag results in a higher slag basicity and compressive strength. The MgO and Al₂O₃ content show the same trend up to about 10 to 12 and 14%, respectively, beyond which no further improvement is observed. The blast furnace slag is preferably ground to provide a specific surface area in the rage of 400 to 440 m²/kg as determined according to MS EN 15167-1:2010 or MS EN196-6: 2007 Clause 4.

The content of the ground granulated blast furnace slag in the binder component is not subject to relevant restrictions. It is preferred however, that the content of this material is in the range of from 12 to 60 wt.-%, preferably 20 to 60 wt.-%.

The sodium silicate solution further preferably contains 60 wt.-% or less, more preferably 50 wt.-% or less of sodium silicate. The most preferred concentration in the context of the present invention with regard to the sodium silicate is about 47%.

A preferred starting material for preparing a corresponding sodium silicate solution is rice husk ash which can simply be dissolved in concentrated sodium hydroxide solution. The preparation of such a sodium silicate solution can be accomplished by heating the mixture for a time sufficient to completely dissolve the rice husk ash and cooling the obtained solution to ambient temperature. In some cases, it may be necessary to adjust the concentration to the desired range by dilution with water.

In addition to the mentioned components, the multi-component cementitious compositions may further comprise one or more additives selected from superplasticizers, retarders, fly ash, lime or hydrated lime, ordinary Portland cement and bentonite. These additives preferably also form part of the binder component.

It is further preferred, that the ratio of water to solids in the binder component is in the range of from 0.3 to 1.0, more preferably 0.35 to 0.65, and most preferably 0.35 to 0.55. The ratio of total water to the combined solids in the binder and hardener component is in the range of from 0.5 to 0.95, and most preferably in the range of from 0.5 to 0.65.

In addition, it is preferred that the ratio of the total solids in the binder component to the total solids in the hardener component is in the range of 2.5 : 1 to 6 : 1 and more preferably 4.7 : 1 to 5.6 : 1, and even more preferably 4.82 : 1 to 5.55 : 1.

As is stated above, the multi-component cementitious composition may comprise ordinary Portland cement in addition to granulated blast furnace slag. Portland cement is the most common type of cement. This cement is generally in use around the world, because it is a basic ingredient of concrete, water, stucco and most non-speciality grout. It is a fine powder produced by grinding Portland cement clinker (99%) with a limited amount of calcium sulphate which controls the set time, and up to 5% minor constituents as defined by the European standard EN 197.1.

A preferred Portland cement for use in the practice of the present application is white cement, such as white cement E-52.5 and E-42.5R. White cement is a Portland cement with a low iron oxide content. It is similar to ordinary, grey Portland cement except for its highly degree of whiteness.

If the composition contains ordinary Portland cement, the cement is preferably also a part of the binder component. In this case, the content of the ordinary Portland cement relative to the total weight of the binder component is 10 to 60 wt.-%, preferably 30 to 55 wt.-%, and most preferably 35 to 45 wt.-%. In addition, it is preferred that the ground granulated blast furnace slag is present in the binder component in 10 to 60 wt.-%, preferably 20 to 35 wt.-%. The weight ratio of the ordinary Portland cement to the ground granulated blast furnace slag is suitably in the range of from 2:1 to 1:5, preferably 1:1 to 1:4. The water to solid ratio (as calculated on the respective weights) in the above described cement compositions is preferably in the range of from 1 to 0.3, preferably 0.7 to 0.4 and most preferably about 0.5.

In another preferred embodiment of the present application, the multi-component cementitious composition is substantially free of ordinary Portland cement. "Substantially free" as this term is used above means that the composition comprises less than 5 % by weight of ordinary Portland cement, preferably less than 2 % by weight, more preferably less than 1 % weight and most preferably less than 0.1 % by weight of ordinary Portland cement. In this case the composition may comprise further solid materials such as in particular hydrated lime or lime and optionally fly ash.

Fly ash, also known as flue-ash, is one of the residues generated in combustion, and comprises the fine particles that rise with the flue gases. In an industrial context, fly ash usually refers to ash produced during combustion of coal. Fly ash is usually recovered from the flue gases by electrostatic precipitators or other particle filtration equipment before the gases reach the chimneys of coal-fired power plants. Depending on the source and makeup of the coal being burned, the components of fly ash vary considerably, but all fly ash includes substantial amounts of silicon dioxide (SiO₂) (both amorphous and crystalline) and calcium oxide (CaO), both being endemic ingredients in many coal-bearing rock strata.

The best results in terms of high early strength were observed in cementitious compositions not comprising fly ash. Thus, compositions comprising ground granulated blast furnace slag in addition to lime or hydrated lime are preferred over those which in addition comprise fly ash.

The amount of hydrated lime in the above compositions is preferably in the range of 8 to 20 wt.-%, relative to the total weight of the binder component, more preferably 10 to 15 wt.-%.

The water to solid ratio (as calculated on the respective weights) in the above described cement compositions is preferably in the range of from 1 to 0.3, preferably 0.8 to 0.4 and most preferably about 0.6 to 0.4.

In the practice of the present application, it is further preferred that the multi-component cementitious composition has a water to binder ratio (W/B) in the range of from 0.6 to 1, preferably from 0.62 to 0.8. The water amount in this ratio is the combined amount of water from each of the components. The binder is intended to mean the inorganic solid components of the composition, i.e., the ground granulated blast furnace slag and, if present, fly ash, hydrated lime, ordinary Portland cement and bentonite.

Bentonite can be added to the multi-component cementitious composition of the present application as a rheology modifier or thixotropic agent. The preferred amount of this additive in the multi-component cementitious composition is in the range of 2 to 0.001 wt.-%, more preferably 1 to 0.01 wt.-% and most preferably 0.5 to 0.05 wt.-%, based on the total weight of the composition.

The superplasticiser of the present application is preferably a polycarboxylate and even more preferably a polycarboxylate ether. Such polymers are produced e.g. by radical copolymerisation of (meth)acrylic acid and polyalkylene glycol-isoprenyl ether (IPEG) having a molecular weight Mw in the range of from about 1000 to 3000 g/mol, preferably 2000 to 2700 g/mol with a number of alkylene glycol units present in the polyalkylene glycol isoprenyl ether in the range of about 30 to 80 and preferably 45 to 65. The molecular weight in the practice of the present application means the molecular weight as determined by GPC, unless otherwise indicated.

Other polycarboxylate ether superplasticizers are obtainable from partial esterification of poly(meth)acrylic acid and alkylpolyoxyalkylene alcohols.

The resulting polymer is essentially random as concerns the distribution of (meth)acrylic acid and polyalkylene glycol isoprenyl ether or polyalkylene glycol acrylate ester units. The molar ratio of acid to polyalkylene glycol monomer units is preferably in the range of 2 : 1 to 15 : 1, preferably 3 : 1 to 4 : 1.

In the practice of the present application it is further preferred that the superplasticizer is included into the multi-component cementitious composition in amounts of from 2 to 0.001 wt.-%, more preferably of from 1 to 0.01 wt.-% and most preferably of from 0.5 to 0.05 wt.-%. While the superplasticizer may in principle be added to either component of the multi-component cementitious composition, it is preferred that it is added to the binder component, as this increases the stability of the binder component.

As a retarder it is possible to use conventional retarders known in the art for cement compositions. Suitable retarders include lignosulfonates, alkaliborates and organophosphonates as well as oligosaccharides. A particularly suitable retader for use in the present application is sugarcane molasses, preferably with a solids content in the range of 30 to 35 %.

The amount of retarder used in the cementitious composition of the present invention is not particularly limited. Preferred amounts of this ingredient range from 2 to 0.001 wt.-%, more preferably of from 1 to 0.01 wt.-% and most preferably of from 0.5 to 0.05 wt.-%.

A further aspect of the present invention is the use of a multi-component cementitious composition as described above as a grout material. Exemplary applications for the mortars and grouts include masonry mortar e.g. for the construction of brickwork, plaster, e.g. for plastering walls and ceilings, fire protection mortar, grouts for joint filling and screed mortars and grouts. Preferably, the multi-component cementitious composition is used as a back filled grout.

A yet further aspect of the present application which is not claimed is the use of a sodium silicate solution containing at least 42 wt.-% of sodium silicate as a hardener for a cementitious composition. The preferred embodiments as discussed above for the multi-component cementitious composition in relation to the sodium silicate solution apply likewise to this use.

In a further aspect, the present invention is directed at a method for the manufacture of a hardened cementitious article comprising
- providing a binder component comprising ground granulated blast furnace slag and water,
- providing a hardener component comprising a sodium silicate solution containing at least 42 wt.-% of sodium silicate, which is physically separated from the binder component,
- mixing the basis and the hardener component,
- inserting the mixed components into a casting mold, and
- hardening the mixture to obtain a hardened cementitious article, wherein the ratio of total water to the combined solids in the binder and hardener component is in the range of 0.5 to 0.95.

The preferred embodiments as described for the multi-component cementitious compositions likewise apply to this method.

The invention will further be described by a way of illustrative examples, which are however not to be construed as limiting in any way to the scope of the present application.

### Examples

In the following investigations, the ground granulated blast furnace slag (GGBS), fly ash, ordinary Portland cement (OPC), bentonite, polycarboxylate ether superplasticizer (PCE; 45% solution in water) water and retarder (sugar cane molasse at a concentration of 30 to 35% in water) were formulated as the component A (binder component).

The hardener component is designated as component B and contained extracted sodium silicate solution (47 mass-%) from rice husk ash for the inventive Examples or industrial sodium silicate solution (40 mass-%) for the comparative Examples. The industrial sodium silicate solution was obtained from Taiko Sdn Bhd.

The extracted sodium silicate from rice husk ash was prepared as follows:
307.28 g sodium hydroxide was loaded into a stainless steel vessel containing 531.4 g water and the slurry was thoroughly mixed. The temperature was then raised to 70 to 80°C by heating. Then, 288 g rice husk ash was added over a period of 2 h. After 2h of heating at 70 to 80°C, the rice husk ash was completely dissolved and the mixture was subsequently cooled to ambient temperature. The solution was finally adjusted to a solids content of about 47%.

The cement water mixtures were prepared as follows:
First, all raw materials of component A were mixed homogeneously in a vessel with an adjustable speed hand mixer at 150 to 300 rpm to form a free flowing slurry. To this slurry, the component B was added while mixing at high speed with the hand-mixer for 3 s and the mixture was then transferred into three 50 x 50 x 50 mm cubes for 3 s. The mold cubes were cured at 27°C to 30°C while covered with a plastic sheet.

In the following W/B designates the mass ratio of water to binder. The compressive strength was determined according to ASTM C 109/C109M-05 by crushing a test cube hardened for 2h to determine the compressive strength. The gel time was determined as the time it takes to form a non-flowable or non-pourable soft gel from a fresh mixture.

### Comparative Examples 1 to 4

These Examples were prepared as described above with sodium silicate 40% solution from Taiko Sdn Bhd in ratios of component A to component B in the range of 10.42 to 8.21. All Comparative Examples exhibited a compressive strength after 2h in the range of from 0.35 mPa to 0.45 mPa with gel times in the range of 4 to 12 s.

**Table 1**

| | Raw materials | C1 | C2 | C3 | C4 |
|---|---|---|---|---|---|
| Component A | PCE (45% sol) | 0.0 | 0.0 | 0.0 | 0.0 |
| | retarder | 1.8 | 1.8 | 2.1 | 4.4 |
| | GGBS (Slag) | 0.0 | 0.0 | 0.0 | 0.0 |
| | Fly ash | 0.0 | 0.0 | 0.0 | 0.0 |
| | Hydrated lime | 0.0 | 0.0 | 0.0 | 0.0 |
| | OPC | 150.0 | 200.0 | 240.0 | 342.5 |
| | Water | 281.5 | 262.0 | 197.5 | 203.0 |
| | Bentonite slurry (10% suspension) | 150.0 | 150.0 | 180.0 | 155.0 |
| | Water/Solid | 2.5 | 1.9 | 1.4 | 1.0 |
| | Total weight (g) | 583.3 | 613.8 | 619.6 | 704.9 |
| | Workability | Flowable | Flowable | Flowable | Flowable |
| | Decantation stability test for 1d | Not stable | Not stable | Not stable | Not stable |
| | Decantation stability test for 3d | Not stable | Not stable | Not stable | Not stable |
| Component B | Sodium silicate (40% sol) | 56 | 63 | 75.5 | 75.5 |
| Component (A+B) | Comp. A/Comp. B ratio | 10.42 | 9.74 | 8.21 | 9.34 |
| | Total weight (g) | 639.28 | 676.78 | 695.10 | 780.35 |
| | Density (A+B) | 1.26 | 1.33 | 1.41 | 1.53 |
| | Water/Solid (A+B) | 2.40 | 1.81 | 1.41 | 1.01 |
| | W/B | 3.01 | 2.18 | 1.89 | 1.14 |
| | Gel time | 4-12s | 4-12s | 4-12s | 4-12s |
| | 2 hrs strength | 0.35 MPa | 0.32 MPa | 0.45 MPa | 0.37 MPa |

### Examples 1 to 4

Examples 1 to 4 were prepared as indicated above. The cementitious compositions 1 to 3 contained GGBS and ordinary Portland cement as primary binders. In Example 4 the ordinary Portland cement was replaced by hydrated lime and fly ash.

The cement compositions and properties are described in the following Table 2.

**Table 2**

| | Raw materials | 1 | 2 | 3 | 4 |
|---|---|---|---|---|---|
| Component A | PCE (45% sol) | 1.2 | 1.2 | 1.2 | 1.3 |
| | retarder | 4.0 | 4.0 | 4.0 | 4.0 |
| | GGBS (Slag) | 400.0 | 200.0 | 100.0 | 200.0 |
| | Fly ash | 0.0 | 0.0 | 0.0 | 200.0 |
| | Hydrated lime | 0.0 | 0.0 | 0.0 | 77.3 |
| | OPC | 77.3 | 277.3 | 377.3 | 0.0 |
| | Water | 210.0 | 210.0 | 210.0 | 210.0 |
| | Bentonite slurry (10% suspension) | 20.0 | 20.0 | 20.0 | 20.0 |
| | Water/Solid | 0.5 | 0.5 | 0.5 | 0.8 |
| | Total weight (g) | 712.5 | 712.5 | 712.5 | 512.6 |
| | Workability | Flowable | Flowable | Flowable | Flowable |
| Component B | Extracted Sodium silicate (47% sol) | 210 | 210 | 210 | 210 |
| Component (A+B) | Comp. A/Comp. B ratio | 3.39 | 3.39 | 3.39 | 2.44 |
| | Total weight (g) | 922.50 | 922.50 | 922.50 | 722.55 |
| | Density (A+B) | 1.71 | 1.73 | 1.74 | 1.26 |
| | Water/Solid (A+B) | 0.59 | 0.59 | 0.59 | 0.91 |
| | W/B | 0.72 | 0.72 | 0.72 | 0.72 |
| | Gel time (s) | 10-20 | 10-20 | 10-20 | 10-20 |
| | 2 hrs strength (MPa) | 0.65 | 4.27 | 2.52 | 0.55 |

As becomes evident from the results in Table 2, the produced back filled grout provides a compressive strength after 2 h in excess of 0.55 MPa. The best slag/ordinary Portland cement system provided a 2 h compressive strengths which were up to 8 times higher than the cement systems based on ordinary Portland cement only (Comparative Examples 1 to 4). The gel time in each case was in the range of 10 to 20 s, even though the slag content varied between 16 and 79%.

### Examples 5 to 8

The compositions of these Examples were prepared as indicated above. The properties and consitutents of these compositions are provided in the following Table 3.

**Table 3**

| | Raw materials | 5 | 6 | 7 | 8 |
|---|---|---|---|---|---|
| Component A | PCE (45% sol) | 1.2 | 1.2 | 1.2 | 1.2 |
| | retarder | 4.0 | 4.0 | 4.0 | 4.0 |
| | GGBS (Slag) | 400.0 | 400.0 | 400.0 | 400.0 |
| | Fly ash | 0.0 | 0.0 | 0.0 | 0.0 |
| | Hydrated lime | 77.3 | 77.3 | 77.3 | 77.3 |
| | OPC | 0.0 | 0.0 | 0.0 | 0.0 |
| | Water | 179.0 | 273.0 | 226.0 | 273.0 |
| | Bentonite slurry (10% suspension) | 20.0 | 5.0 | 5.0 | 5.0 |
| | Water/Solid | 0.4 | 0.6 | 0.5 | 0.8 |
| | Total weight (g) | 681.5 | 780.5 | 713.5 | 780.5 |
| | Workability | Flowable | Watery Flowable | Watery Flowable | Watery Flowable |
| | Decantation stability test for 1d | Not stable | Just stable | stable | stable |
| | Decantation stability test for 3d | Not stable | Just remixable | remixable | Remixable |
| Component B | Extracted Sodium silicate (47% sol) | 210 | 210 | 210 | 323 |
| Component (A+B) | Comp. A/Comp. B ratio | 3.25 | 3.62 | 3.40 | 2.35 |
| | Total weight (g) | 891.50 | 970.50 | 923.50 | 1083.50 |
| | Density (A+B) | 1.72 | 1.62 | 1.67 | 1.60 |
| | Water/Solid (A+B) | 0.54 | 0.68 | 0.60 | 0.72 |
| | W/B | 0.65 | 0.82 | 0.72 | 0.95 |
| | Gel time (s) | 15 | 20 | 15 | 50-80 |
| | 2 hrs strength (MPa) | 10.13 | 0.66 | 5.0 | 2.0 |

The produced two component grouts exhibited a compressive strength which was up to 20 times higher than the 2 h compressive strength found in the ordinary Portland cement system. The slurry for the slag system was found to be excellently stable for 1 day without hardening effects. This further indicates, that the slag system without ordinary Portland cement provides improved performance for two component back filled grouts.

## Claims

1. A multi-component cementitious composition with at least a binder and a hardener component,
wherein the binder component comprises ground granulated blast furnace slag and water, wherein the hardener component comprises a sodium silicate solution containing at least 42 wt.-%, preferably at least 45 wt.-% of sodium silicate (Na₂SiO₃) and
wherein the ratio of total water to the combined solids in the binder and hardener component is in the range of 0.5 to 0.95.

2. The multi-component cementitious composition of claim 1 having a compressive strength of > 0.5 MPa after 2 hours and optionally a gel time of from 10 to 50 s.

3. The multi-component cementitious composition of claim 1 or 2, wherein the binder component further comprises one or more of a superplasticizer, a retarder, fly ash, lime or hydrated lime, ordinary Portland cement and bentonite.

4. The multi-component cementitious composition of any one of claims 1 to 3, wherein the sodium silicate solution contains 60 wt.-% or less, preferably 50 wt.-% or less of sodium silicate.

5. The multi-component cementitious composition of any one of the preceding claims, wherein the ratio of water to solids in the binder component is in the range of 0.3 to 1.0, preferably 0.35 to 0.65 and most preferably 0.35 to 0.55.

6. The multi-component cementitious composition of any one of the preceding claims, wherein the ratio of total water to the combined solids in the binder and hardener component is in the range of 0.5 to 0.65.

7. The multi-component cementitious composition of any one of the preceding claims, wherein the ratio of total solids in the binder component to total solids in the hardener component is in the range of 2.5 to 6, preferably 4.7 to 5.6 and most preferably 4.82 to 5.55.

8. The multi-component cementitious composition of any one of the preceding claims, wherein the binder component comprises ground granulated blast furnace slag and ordinary Portland cement in a weight ratio of from 1:1 to 1:4.

9. The multi-component cementitious composition of any one of the preceding claims, wherein the binder component comprises lime or hydrated lime and is substantially free of ordinary Portland cement.

10. The multi-component cementitious composition of any one of the preceding claims, having a water to binder ratio in the range of from 0.6 to 1, preferably of from 0.62 to 0.8, wherein the binder is the inorganic solid components of the composition.

11. The multi-component cementitious composition of claim 3 or a thereon dependant claim, where in the superplasticizer is a polycarboxylate, preferably a polycarboxylate ether.

12. Use of a multi-component cementitious composition as described in any one of claims 1 to 11 as a grout material, preferably a back filled grout material.

13. A method for the manufacture of a hardened cementitious article comprising
- providing a binder component comprising ground granulated blast furnace slag and water,
- providing a hardener component comprising a sodium silicate solution containing at least 42 wt.-% of sodium silicate, which is physically separated from the binder component,
- mixing the binder and the hardener component
- inserting the mixed components into a casting mold, and
- hardening the mixture to obtain a hardened cementitious article,
wherein the ratio of total water to the combined solids in the binder and hardener component is in the range of 0.5 to 0.95.

## Patentansprüche

1. Zementgebundene Mehrkomponentenzusammensetzung mit mindestens einer Bindemittel- und einer Härterkomponente,
wobei die Bindemittelkomponente gemahlene granulierte Hochofenschlacke und Wasser umfasst, wobei die Härterkomponente eine Natriumsilikatlösung umfasst, die mindestens 42 Gew.%, vorzugsweise mindestens 45 Gew.% Natriumsilikat (Na₂SiO₃) enthält, und
wobei das Verhältnis von Gesamtwasser zu den summierten Feststoffen in der Bindemittel- und der Härterkomponente im Bereich von 0,5 bis 0,95 liegt.

2. Zementgebundene Mehrkomponentenzusammensetzung nach Anspruch 1 mit einer Druckfestigkeit > 0,5 MPa nach 2 Stunden und gegebenenfalls einer Gelzeit von 10 bis 50 s.

3. Zementgebundene Mehrkomponentenzusammensetzung nach Anspruch 1 oder 2, wobei die Bindemittelkomponente des Weiteren ein oder mehrere von einem Superplastifizierungsmittel, einem Verzögerer, Flugasche, Kalk oder Kalkhydrat, gewöhnlichem Portlandzement und Bentonit umfasst.

4. Zementgebundene Mehrkomponentenzusammensetzung nach einem der Ansprüche 1 bis 3, wobei die Natriumsilikatlösung 60 Gew.% oder weniger, vorzugsweise 50 Gew.% oder weniger Natriumsilikat enthält.

5. Zementgebundene Mehrkomponentenzusammensetzung nach einem der vorhergehenden Ansprüche, wobei das Verhältnis von Wasser zu Feststoffen in der Bindemittelkomponente im Bereich von 0,3 bis 1,0, vorzugsweise 0,35 bis 0,65 und am meisten bevorzugt 0,35 bis 0,55 liegt.

6. Zementgebundene Mehrkomponentenzusammensetzung nach einem der vorhergehenden Ansprüche, wobei das Verhältnis von Gesamtwasser zu den summierten Feststoffen in der Bindemittel- und der Härterkomponente im Bereich von 0,5 bis 0,65 liegt.

7. Zementgebundene Mehrkomponentenzusammensetzung nach einem der vorhergehenden Ansprüche, wobei das Verhältnis von Gesamtfeststoffen in der Bindemittelkomponente zu Gesamtfeststoffen in der Härterkomponente in dem Bereich von 2,5 bis 6, vorzugsweise 4,7 bis 5,6 und am meisten bevorzugt 4,82 bis 5,55 liegt.

8. Zementgebundene Mehrkomponentenzusammensetzung nach einem der vorhergehenden Ansprüche, wobei die Bindemittelkomponente gemahlene granulierte Hochofenschlacke und gewöhnlichen Portlandzement in einem Gewichtsverhältnis von 1:1 bis 1:4 umfasst.

9. Zementgebundene Mehrkomponentenzusammensetzung nach einem der vorhergehenden Ansprüche, wobei die Bindemittelkomponente Kalk oder Kalkhydrat umfasst und im Wesentlichen frei von gewöhnlichem Portlandzement ist.

10. Zementgebundene Mehrkomponentenzusammensetzung nach einem der vorhergehenden Ansprüche mit einem Verhältnis von Wasser zu Bindemittel im Bereich von 0,6 bis 1, vorzugsweise 0,62 bis 0,8, wobei das Bindemittel die anorganischen Feststoffkomponenten der Zusammensetzung ist.

11. Zementgebundene Mehrkomponentenzusammensetzung nach Anspruch 3 oder einem davon abhängigen Anspruch, wobei das Superplastifizierungsmittel ein Polycarboxylat, vorzugsweise ein Polycarboxylatether, ist.

12. Verwendung einer zementgebundenen Mehrkomponentenzusammensetzung nach einem der Ansprüche 1 bis 11 als Mörtelmaterial, vorzugsweise Verfüllmörtel.

13. Verfahren zur Herstellung eines gehärteten zementgebundenen Artikels, umfassend:
- Bereitstellen einer Bindemittelkomponente, die gemahlene granulierte Hochofenschlacke und Wasser umfasst,
- Bereitstellen einer Härterkomponente, die eine Natriumsilikatlösung umfasst, die mindestens 42 Gew.% Natriumsilikat enthält, die physikalisch von der Bindemittelkomponente getrennt ist,
- Mischen der Bindemittel- und der Härterkomponente,
- Einbringen der gemischten Komponente in eine Gussform, und
- Härten der Mischung, um einen gehärteten zementgebundenen Artikel zu erhalten,
wobei das Verhältnis von Gesamtwasser zu den summierten Feststoffen in der Bindemittel- und der Härterkomponente im Bereich von 0,5 bis 0,95 liegt.

## Revendications

1. Composition cimentaire à plusieurs composants comportant au moins un composant de liant et de durcisseur,
le composant de liant comprenant du laitier de hauts fourneaux granulé moulu et de l'eau, le composant durcisseur comprenant une solution de silicate de sodium contenant au moins 42 % en poids, préférablement au moins 45 % en poids de silicate de sodium (Na₂SiO₃) et
le rapport de l'eau totale aux solides combinés dans le composant de liant et de durcisseur se situant dans la plage de 0,5 à 0,95.

2. Composition cimentaire à plusieurs composants selon la revendication 1 possédant une résistance à la compression > 0,5 MPa après 2 heures et éventuellement un temps de gel de 10 à 50 s.

3. Composition cimentaire à plusieurs composants selon la revendication 1 ou 2, le composant de liant comprenant en outre un ou plusieurs parmi un superplastifiant, un retardateur, des cendres volantes, de la chaux ou de la chaux hydratée, du ciment Portland ordinaire et de la bentonite.

4. Composition cimentaire à plusieurs composants selon l'une quelconque des revendications 1 à 3, la solution de silicate de sodium contenant 60 % en poids ou moins, préférablement 50 % en poids ou moins de silicate de sodium.

5. Composition cimentaire à plusieurs composants selon l'une quelconque des revendications précédentes, le rapport d'eau à solides dans le composant de liant se situant dans la plage de 0,3 à 1,0, préférablement de 0,35 à 0,65 et le plus préférablement de 0,35 à 0,55.

6. Composition cimentaire à plusieurs composants selon l'une quelconque des revendications précédentes, le rapport de l'eau totale aux solides combinés dans le composant de liant et de durcisseur se situant dans la plage de 0,5 à 0,65.

7. Composition cimentaire à plusieurs composants selon l'une quelconque des revendications précédentes, le rapport des solides totaux dans le composant de liant aux solides totaux dans le composant de durcisseur se situant dans la plage de 2,5 à 6, préférablement de 4,7 à 5,6 et le plus préférablement de 4,82 à 5,55.

8. Composition cimentaire à plusieurs composants selon l'une quelconque des revendications précédentes, le composant de liant comprenant du laitier de hauts fourneaux granulé moulu et du ciment Portland ordinaire en un rapport pondéral de 1:1 à 1:4.

9. Composition cimentaire à plusieurs composants selon l'une quelconque des revendications précédentes, le composant de liant comprenant de la chaux ou de la chaux hydratée et étant essentiellement exempte de ciment Portland ordinaire.

10. Composition cimentaire à plusieurs composants selon l'une quelconque des revendications précédentes, possédant un rapport eau à liant dans la plage de 0,6 à 1, préférablement de 0,62 à 0,8, le liant étant le composant solide inorganique de la composition.

11. Composition cimentaire à plusieurs composants selon la revendication 3 ou une revendication dépendante de celle-ci, dans laquelle le superplastifiant est un polycarboxylate, préférablement un polycarboxylate éther.

12. Utilisation d'une composition cimentaire à plusieurs composants telle que décrite dans l'une quelconque des revendications 1 à 11 en tant que matériau de coulis, préférablement en tant que matériau de coulis remblayé.

13. Procédé pour la fabrication d'un article cimentaire durci comprenant
- la mise à disposition d'un composant de liant comprenant du laitier de hauts fourneaux granulé moulu et de l'eau,
- la mise à disposition d'un composant de durcisseur comprenant une solution de silicate de sodium contenant au moins 42 % en poids de silicate de sodium, qui est séparée physiquement du composant de liant,
- le mélange du composant de liant et de durcisseur
- l'insertion des composants mélangés dans un moule de coulée, et
- le durcissement du mélange pour obtenir un article cimentaire durci,
le rapport de l'eau totale aux solides combinés dans le composant de liant et de durcisseur se situant dans la plage de 0,5 à 0,95.
